# EUROPEAN PATENT SPECIFICATION

(11) **EP 4 229 142 B1**
(45) Date of publication and mention of the grant of the patent: **05.02.2025**
(21) Application number: 20841862.4
(22) Date of filing: 30.12.2020
(51) Int. Cl.: C09J 123/08, C08L 29/04, C08L 71/02, C08K 5/098, D06N 7/00

(54) **AN AQUEOUS POLYMER DISPERSION**
WÄSSRIGE POLYMERDISPERSION
DISPERSION AQUEUSE DE POLYMÈRE

(43) Date of publication of application: 23.08.2023
(73) Proprietor: Wacker Chemie AG, 81671 München (DE)
(72) Inventor: XU, Jie, Shanghai 200233 (CN); CHEN, Qian, Shanghai 200233 (CN); ZHOU, Jiaxiang, Shanghai 200233 (CN); ZHENG, Jin, Shanghai 200233 (CN)
(74) Representative: Ege, Markus
(86) International application number: PCT/CN2020/141294
(87) International publication number: WO 2022/141163

(56) References cited:
- US-A1- 2005 287 336
- US-A1- 2012 015 201
- US-A1- 2017 081 544

## Description

### Technical field

The invention relates to the technical field of adhesives, and particularly related to the technical field of carpet adhesives.

### Technical Background

CN102869828B discloses a VAE aqueous dispersion for carpet bonding. The amount of protective colloid is less than 1 pphm, and the sum of the amount of nonionic surfactant and anionic surfactant is between 2-4pphm. This product has poor water resistance.

CN102333799B discloses a VAE aqueous dispersion, which is suitable for the bonding application of paper products, plastics, textiles and fiber materials; in Example 41, the amount of hydroxyethyl cellulose HEC is 1.1 pphm, and the amount of non-ionic surfactant is 2.0 pphm.

CN104411488B discloses a VAE aqueous dispersion for paper bonding. In Example 6, the amount of polyvinyl alcohol is 0.2 pphm, the amount of anionic surfactant is 0.5 pphm, and the amount of non-ionic surfactant is 3 pphm.

US2017081544 refers to an aqueous carpet coating composition comprising: (A) particulate filler material; and (B) a stabilized copolymer dispersion comprising: (a) a copolymer formed by emulsion polymerization of a monomer mixture comprising a vinyl ester and 1 to 25 pphm of ethylene; (b) water; and (c) a stabilizing system comprising (i) 1 to 4 pphm of an emulsifier component consisting of non-ionic surfactant and (ii) 0.5 to 4 pphm of a first polyvinyl alcohol component having a degree of hydrolysis greater than 92 mol%.

US2005287336 describes carpet coating compositions which utilize an emulsion binder which is prepared by emulsion polymerization of ethylene, a vinyl ester monomer and a functional monomer and to carpet products prepared with the carpet coating compositions.

### Summary of the invention

The present invention expects to obtain an aqueous dispersion which has the advantages of excellent water resistance, good stability, and good workability. The aqueous dispersion can be applied to carpet binder industries.

As used herein, the term "pphm" refers to parts per hundred main monomer, i.e., parts per hundred of the vinyl acetate and ethylene.

An aqueous polymer dispersion containing
Component (a) one or more ethylene-vinyl ester copolymers,
Component (b) one or more protective colloids,
component (c1) one or more nonionic surfactants, and
optional component (c2) one or more ionic surfactants,
wherein the amount of component (b) protective colloid and component (c1) nonionic surfactant is less than or equal to 3.4pphm, for example 1.8pphm , 2.2pphm, 2.4pphm, 2.6pphm, 2.8pphm,
3pphm, 3.2pphm, preferably between 1-3.4 pphm, more preferably between 2-3.1 pphm;
the weight ratio of the amount of component (b) protective colloid to component (c1) nonionic surfactant is between 1.01-2, more preferably between 1.05-1.5, such as 1.1, 1.2, 1.3, 1.4, 1.8.
which also contains component (d) one or more dispersants, selected from polycarboxylates; and the amount of component (d) dispersants is less than or equal to 1 pphm,
wherein the component (b) protective colloid is selected from polyvinyl alcohol (PVOH).

The aqueous dispersion as described above, wherein the weight ratio of the amount of component (b) protective colloid and component (c1) nonionic surfactant is between 1.01-2, preferably between 1.05-1.5, for example 1.1, 1.2, 1.3, 1.4, 1.8.

The aqueous dispersion as described above, wherein the sum of the amount of component (b) protective colloid and component (c1) nonionic surfactant is less than or equal to 3.4pphm, such as 1.8pphm, 2.2pphm, 2.4pphm, 2.6pphm, 2.8pphm, 3pphm, 3.2pphm, preferably between 1-3.4 pphm, more preferably between 2-3.1 pphm.

The aqueous dispersion as described above, wherein the amount of component (b) protective colloid is less than or equal to 2 pphm, preferably between 1.0 and 1.8 pphm, more preferably between 1.3 and 1.7 pphm, such as 1.1 pphm, 1.2 pphm, 1.4 pphm , 1.6 pphm.

The aqueous dispersion as described above, wherein the amount of component (c2) ionic surfactant is less than 0.5 pphm, preferably less than or equal to 0.1 pphm, and more preferably less than 0.01 pphm.

The aqueous dispersion as described above, wherein the amount of sodium vinyl sulfonate is less than 0.5 pphm, preferably less than or equal to 0.1 pphm, and more preferably less than 0.01 pphm.

The aqueous dispersion as described above, wherein the dispersion further containing component (f) one or more thickeners, the dosage of which is less than or equal to 1 pphm, preferably less than or equal to 0.2 pphm, more preferably less than or equal to 0.5 pphm, more preferably between 0.05-0.2 pphm, such as 0.08, 0.1, 0.12, 0.14, 0.16, 0.18 pphm.

In the present invention, the component (f) thickeners containing component (f1) which consisting of ASE (alkali swellable emulsion) thickener and HASE (hydrophobic modified alkali swellable emulsion) thickener and component (f2) natural polymers and their derivatives.

The aqueous dispersion as described above, wherein component (f) is component (f1), which consisting of ASE (alkali swellable emulsion) thickener and HASE (hydrophobic modified Alkali swellable emulsion) thickener composition; preferably ASE thickener which containing acrylamide and/or acrylic monomer; or preferably HASE thickener which containing acrylamide and/or acrylic monomer.

There are 2 major families of alkali swellable acrylic thickeners: thickeners of the ASE (Alkali Swellable Emulsion) type and those of HASE (Hydrophobically modified Alkali Swellable Emulsion) type. The first designate copolymers of methacrylic acid with a non-water-soluble ester of this acid, and the second designate methacrylic acid based copolymers of a non-water soluble ester of the (meth)acrylic acid and a monomer with so-called "associative" hydrophobic groups. In addition, these copolymers can be cross-linked.

The aqueous dispersion as described above, which also contains component (d) one or more dispersants, selected from polycarboxylates, preferably selected from ammonium polycarboxylates, sodium polycarboxylates, potassium polycarboxylates, more preferably selected from ammonium polycarboxylate.

The aqueous dispersion as described above, wherein the amount of component (d) dispersants is less than or equal to 1 pphm, preferably less than or equal to 0.5 pphm, and more preferably between 0.01 and 0.1 pphm; for example, 0.02, 0.03, 0.04, 0.06, 0.08pphm.

The aqueous dispersion as described above, which contains or does not contain component (e) solid powder, if it contains component (e) solid powder, its dosage is less than or equal to 100 pphm, preferably less than or equal to 50 pphm, more preferably less than 10 pphm.

The aqueous dispersion as described above, wherein the dispersant component (d) is ammonium polycarboxylate, and when pH=8-9, the viscosity of its 20wt% aqueous dispersion is between 100-1 000 mPa.s, preferably between 100-500 mPa.s.

The aqueous dispersion as described above, wherein the weight ratio of the component (a) ethylene-vinyl ester copolymer to the total amount of all polymers and copolymers in the aqueous dispersion is 0.8 or more, preferably 0.9 or more, more preferably 0.95 or more .

The aqueous dispersion as described above, wherein the amount of the optional component (a') Other copolymers are less than or equal to 1wt%, preferably less than or equal to 0.1wt%, and the aqueous dispersion is calculated as 100wt%, and component (a') Other copolymers contains vinyl acrylic copolymers, styrene acrylate copolymers, styrene butadiene copolymers, acrylic polymers, and vinyl acetate homopolymers.

The aqueous dispersion as described above, has a Brookfield viscosity between 500-4000 mPa.s, preferably between 1200-3000 mPa.s, and more preferably between 1500-2500 mPa.s.

The aqueous dispersion as described above, wherein the weight ratio of component (b) protective colloid and component (d) dispersants is between 3-300; preferably between 5-100, more preferably between 5-50, more preferably between 10-40. For example, 25, 30, 35, 38, 45.

The aqueous dispersion as described above, wherein the weight ratio of the component (c1) nonionic surfactant and the component (d) dispersant is between 3 and 300; preferably between 5 and 100, more preferably between 5 and 50, more preferably between 20 and 40. For example, 22, 25, 32, 35, 38.

The aqueous dispersion as described above, wherein the solid content of which is between 49-66wt%, preferably between 53-63wt%; more preferably between 54-60wt%. For example, 55wt%, 56wt%, 57wt%, 58wt%, 59wt%.

The aqueous dispersion as described above, wherein Tg of the aqueous dispersion is between 0-5°C, preferably between 0-4°C, more preferably between 0-2°C.

The use of the above-mentioned aqueous dispersion in the bonding composition, preferably the use of the foaming bonding composition, more preferably the use of the carpet bonding composition, and more preferably the use of the carpet bonding composition having an improved water resistance effect.

The improved water resistance effect refers to the definition of wet bonding strength according to the wet bonding strength test part of the present invention.

The use of the above-mentioned aqueous dispersion in the foaming carpet bonding composition, and more preferably the use of the foaming carpet bonding composition having an improved water resistance effect.

The use as described above, wherein the carpet is machine made carpet, preferably woven carpet, tufted carpet, more preferably tufted broadloom carpet.

The aqueous dispersion as described above, wherein in the component (a) ethylene-vinyl ester copolymer, the amount of vinyl ester monomer is greater than or equal to 70wt%, preferably greater than or equal to 80wt%, more preferably between 80-90wt%, more preferably between 82-88wt%, based on 100wt% of all monomers.

The aqueous dispersion as described above, wherein in the component (a) ethylene-vinyl ester copolymer, the amount of ethylene monomer is less than or equal to 30wt%, preferably between 10-20wt%, more preferably between 12-18wt%, based on 100wt% of all monomers.

The aqueous dispersion as mentioned above, wherein the amount of vinyl acetate and ethylene in component (a) is greater than or equal to 95 wt%, preferably greater than or equal to 98wt%, more preferably greater than or equal to 99 wt%, more preferably greater than or equal to 99.9 wt%, based on the 100wt% of Component (a).

The aqueous dispersion as described above, wherein the component (a) ethylene-vinyl ester copolymer is an ethylene-vinyl acetate copolymer.

The vinyl esters typically include vinyl esters of linear or branched alkyl carboxylic acids having 1 to 15 carbon atoms, such as vinyl acetate, vinyl propionate, vinyl butyrate, vinyl pivalate , Vinyl 2-ethylhexanoate, vinyl laurate, or any combination of the above.

In order to extend the performance of component (a) ethylene-vinyl ester copolymer, in addition to vinyl ester and ethylene monomers, other comonomers may be included, such as vinyl halides, such as vinyl chloride; olefins, such as propylene; Ethylene unsaturated carboxylic acids and their derivatives, such as fumaric acid, maleic acid, maleic anhydride, acrylamide, acrylonitrile; pre-crosslinking comonomers or post-crosslinking comonomers, such as adipic acid two Vinyl ester, diallyl maleate, allyl methacrylate, triallyl cyanurate, acrylamido glycolic acid, methyl methacrylamido glycolate, N-methylol Acrylamide, N-methylol methacrylamide, N-methylol allyl carbamate, isobutoxy ether or ester of N-methylol acrylamide, N-methylol methyl propylene Isobutoxy ether or ester of amide, isobutoxy ether or ester of N-methylol allyl carbamate; epoxy functional comonomers, such as glycidyl methacrylate, glycidyl acrylate; Silicone functional comonomers, such as vinyl trialkoxy silane, vinyl methyl dialkoxy silane.

The amount of these other comonomers is less than or equal to 2 wt%, preferably less than or equal to 1 wt%, more preferably less than or equal to 0.1 wt%, and the amount of vinyl ester monomer is calculated as 100 wt%.

The aqueous dispersion as described above, wherein the component (b) protective colloid is selected from polyvinyl alcohol (PVOH).

The aqueous dispersion as described above, wherein PVOH refers to polyvinyl alcohol, and its degree of hydrolysis is between 40-99% (mol/mol); preferably between 75-95 (mol/mol)%; more preferably between 85-92 (mol/mol)%, the viscosity of a 4wt% aqueous solution measured according to DIN 53015 at 20°C is between 3-5 mPa·s or 15-18 mPa·s or 20-28 mPa·s, for example, these products are commonly referred to as PVOH0488, PVOH1788, PVOH2588.

The aqueous dispersion as described above, wherein the component (c1) nonionic surfactant is selected from alkyl alcohol polyoxyethylene ether and/or alkyl acid polyoxyethylene ester, and the alkyl part is preferably a C10-C18 alkyl group, C12-C16 alkyl is more preferred, and the EO number (-CH₂CH₂O-) of the polyoxyethylene part is preferably between 10-32, more preferably between 12-30.

An aqueous carpet bonding composition containing
The aqueous polymer dispersion as described above,
Component (e) solid powder,
foaming agent component (g1), and optional foaming aid component (g2)
Optional component (f) thickeners,
Optional water.

The bonding composition as described above, wherein the weight ratio of the component (a) ethylene-vinyl ester copolymer to the total amount of all polymers and copolymers in the composition is 0.8 or more, preferably 0.9 or more, more preferably 0.95 or more .

The bonding composition as described above, wherein the optional component (a') Other copolymers are used in an amount of less than or equal to 1 wt%, preferably less than or equal to 0.1 wt%, based on 100 wt% of the composition.

The bonding composition as described above, wherein the solid content greater than or equal to 68 wt%, preferably between 70-90 wt%, more preferably between 75-85 wt%, and more preferably between 78-82 wt%.

The bonding composition as described above, wherein the component (e) solid powder is selected from inorganic and polymer materials, preferably one or more selected from the group containing pigments, aluminosilicates (such as clay or kaolin), calcium carbonate, amorphous silica, Silica, titanium dioxide, talc, barite, feldspar, barium disulfate, calcium aluminum pigment, satinite, zinc oxide, aluminum trihydrate, silicate, barium sulfate, gypsum mica, diatomaceous earth, fly ash, ground glass, polymer pigments, hollow polymer pigments and recycled carpet backing; more preferably selected from granular calcium carbonate.

The bonding composition as described above, wherein the particle size of the component (e) solid powder is 200 nm to 1000 µm, more preferably 1 µm to 500 µm, most preferably 10 µm to 300 µm.

The bonding composition as described above, wherein the weight ratio of component (e) solid powder to component (a) ethylene-vinyl ester copolymer is between 2-10, preferably between 3-8, and more preferably between 4-6, such as 4.5, 5, 5.5, 6.5, 7.

The bonding composition as described above, wherein the amount of component (e) solid powder is between 50-97.5wt%, preferably between 55-90wt%, more preferably between 60-80wt%, based on 100 wt% of the composition.

The bonding composition as described above, wherein the component (f) thickeners is preferably selected from the component (f2) natural polymers and their derivatives, preferably one or more selected from the group containing starch, gelatin, sodium alginate, casein, guar gum , chitosan, gum arabic, xanthan gum, soybean egg white gum, natural rubber, lanolin, agar, more preferably selected from xanthan gum.

The bonding composition as described above, which has a Brookfield viscosity between 4000-12 000 mPa.s, preferably between 4500-10 000 mPa.s, and more preferably between 5000-7000 mPa.s.

The bonding composition as described above, which has a Brookfield viscosity between 4000-12 000 mPa.s, preferably between 8000 -12000 mPa.s, and more preferably between 9000-11 000 mPa.s.

The bonding composition as described above, which is a foam-containing composition, preferably a foam-containing composition after whipping.

The bonding composition as described above, wherein the foaming agent component (g1) is selected from anionic surfactants.

The bonding composition as described above, wherein the optional foaming aid component (g2) is selected from alkyl alcohols and alkyl ethers, in which the alkyl group contains 6-18 carbon atoms.

A carpet obtained by bonding carpet fibers using the above-mentioned aqueous carpet bonding composition, wherein the carpet is a machine-made carpet, preferably a tufted carpet, and more preferably a tufted broadloom carpet.

The aqueous coating compositions as described above are applied to the flexible substrate(s) which form the carpet products herein. Upon drying, the applied aqueous coating compositions then provide the coating, i.e., binder, and/or adhesive layers within the carpet products. The carpet products can comprise only one or more than one adhesive or binder coating layer.

The carpet products herein can optionally also comprise a second separate layer which can be an adhesive layer to secure a secondary backing substrate to an already cured coated primary backing. In one embodiment, the carpet product can comprise both a binder coating layer and an adhesive layer which are formed from the same type of aqueous bonding composition. Alternatively, the carpet products herein can comprise both a binder coating layer and an adhesive layer, wherein the two layers are formed from different aqueous bonding compositions, with at least the binder coating layer, and preferably both layers, being formed from the type of VAE-based aqueous bonding compositions described herein.

Suitable flexible substrates for use with the present coating compositions can, for example, be selected from nonwovens, wovens, unidirectional weaves, knitted fabrics and pile fabrics. Thus the carpet products herein can be conventional tufted carpet, non-tufted carpet or needle-punched carpet. Such carpet products can be prepared by applying and drying the emulsion copolymer-containing aqueous bonding compositions using equipment which is readily available in most carpet mills.

Pile carpet products comprise a primary backing with pile yarns extending from the primary backing substrate to form pile tufts. Pile or tufted carpet can be prepared by a) tufting or needling yarn into a woven or non-woven backing substrate; b) applying the aqueous carpet coating composition as described herein to the rear of the backing such that the yam is embedded in the carpet coating composition; and c) drying the resultant carpet construction. In producing such tufted carpets, it is also desirable to apply a secondary backing to the primary backing either before or after drying of the carpet coating, depending upon the type of backing employed.

For tufted carpets, the primary backing substrate can be non-woven polypropylene, polyethylene or polyester or woven jute, polypropylene or poly amide (synthetic and natural). If a secondary backing is used, it is generally formed of woven or non-woven materials similar to those used as the primary backing and applied directly to the wet pre-coated primary backing prior to the drying step or applied with a separate adhesive to the dried precoated primary backing. Such a secondary backing provides dimensional stability to the carpet. The secondary backing also may be in the form of a preformed sheet polymer or copolymer. Suitable preformed sheet compositions include urethane polymers, polymers and copolymers of ethylene, propylene, isobutylene, and polyvinylbutyral.

The carpet products herein can also be non-tufted carpets wherein the fibers are embedded into a coating or binder composition which has been coated onto a woven or non-woven substrate. Non-tufted carpets also may be prepared by a) coating an aqueous bonding composition such as hereinbefore described onto a substrate; b) embedding the carpet fibers in the substrate; and c) drying the resultant carpet construction. In forming a non-tufted carpet, the carpet coating can be thickened and applied to a scrim surface. The fibers then are directly embedded into the wet coating using conventional techniques and then dried. These non-tufted carpets also may be advantageously prepared utilizing a secondary backing that can provide additional dimensional stability.

In preparing the carpet products herein, the aqueous bonding composition is applied in a manner such that it penetrates the fibers of the carpet yams to yield better adhesion, fiber bundle integrity, anti-fuzzing properties and suitable tuft-bind values. Suitable carpet performance properties can be achieved by applying an amount of the aqueous coating/binder composition ranging from about 100 g/m² to about 3000 g/m², more preferably from about 200 g/m² to about 2000 g/m², and most preferably from about 400 g/m² to about 1500 g/m² (dry basis).

### Carpet Product Characteristics

The carpet products herein, with the specific type of vinyl acetate/ethylene-based copolymer dispersions used in forming coating and/or adhesive layers, also have especially desirable, environmental characteristics. The copolymer dispersions used, by virtue of preferably containing no cross-linking groups which generate formaldehyde (e.g. no NMA or NMA-LF), and by virtue of their low TVOC content and TVOC emission, do not cause potentially problematic materials of this type to be emitted from the carpet products herein. Further, since the carpet products herein do not utilize SBR coatings or binders, the carpet product will also be substantially free of potentially toxic components such as 4-phenylcyclohexene (4-PCH), 4-vinylcyclohexene (4-VCH), styrene, and ethylbenzene. The carpet products herein, with the specific type of vinyl acetate/ethylene-based copolymers used in forming coating and/or adhesive layers, are also desirably resistant to degradation upon exposure to light having both visible and ultraviolet (UV) components.

### Embodiments

PVOH 2588, a polyvinyl alcohol aqueous solution with 88wt% hydrolysis degree. The 4wt% aqueous solution has a viscosity of 25 mPa·s measured according to DIN 53015 at 20°C. It is prepared into an aqueous solution of 10.3 wt% before use.

Non-ionic surfactant 1, an aqueous solution of Aliphatic alcohol ethoxylates, containing 30 EO units, C13 alkyl group, HLB value of 17.2.

Ammonium polycarboxylate, prepared into an aqueous solution with an active ingredient content of about 20wt% before use. The viscosity is about 300 mPa.s under the condition of pH=8-9 and 20wt% .

Thickener 1, anionic polyacrylic acid, obtained by copolymerization of acrylic acid-containing monomers, shows anionic characteristics under alkaline conditions and has a thickening effect. It is prepared into an aqueous solution with an active ingredient content of about 30 wt% before use.

tBHP, tert-butyl hydroperoxide, prepared into 10wt% aqueous solution before use.

FF6, disodium glycolic acid sulfinic acid, prepared into 5wt% aqueous solution before use (purchased from Brüggemann Chemical incorporates).

EDTA-2Na, ethylenediamine tetraacetic acid disodium salt, prepared into 8wt% aqueous solution before use.

FeAS, ferrous ammonium sulfate, prepared into 10wt% aqueous solution before use,
Calcium carbonate, powder, the particle size is between 10-100µm.

Foaming agent, sodium dodecyl sulfonate.

The above substances are all commercially available.

### Preparation method

Step 1. Add deionized water, PVOH 2588 aqueous solution, non-ionic surfactant, etc. into the 5-liter reactor. Mix the ingredients well and adjust the pH of the mixture to 4 by formic acid, and then add FeAS.

Heat the reactor to about 57°C, add the first part of vinyl acetate and ethylene gas, and keep the reactor pressure below 45 bar.

Incubate at about 57°C, while adding tBHP aqueous solution and FF6M aqueous solution dropwise to initiate the reaction and continue the dropwise addition until the reaction is complete. The reaction was initiated to increase the temperature to 85°C, and the second part of vinyl acetate and ethylene gas was continuously added, and the pressure of the reactor was maintained at about 58 bar.

Step 2. After reacting for 4 hours, transfer the product to a degassing tank, add a mineral oil defoamer, and obtain an aqueous polymer dispersion after degassing for 30 minutes. The Tg of this product is between 0-5°C; the solid content is between 54-60wt%.

The examples and comparative examples were prepared by the above methods, and the specific components and dosages are shown in Table 1.

**Table 1**

| | Ex.0 | C.Ex.1 | Ex.2 | C.Ex.3 | C. Ex.4 | C.Ex.5 |
|---|---|---|---|---|---|---|
| VAM | 82.77 | 82.77 | 82.77 | 82.77 | 82.77 | 82.77 |
| Ethylene | 17.23 | 17.23 | 17.23 | 17.23 | 17.23 | 17.23 |
| | | | | | | |
| PVOH 2588 pure material | 1.42 | 1.42 | 1.42 | 1.42 | 1.2 | 1.0 |
| Non-ionic surfactant 1 pure material | 1.22 | 1.22 | 1.22 | 1.22 | 2.5 | 1.5 |
| Thickener 1 pure material | 0.11 | 0 | 0 | 0.11 | 0.11 | 0.11 |
| Ammonium polycarboxylate pure material | 0.04 | 0 | 0.04 | 0 | 0.04 | 0.04 |
| | | | | | | |
| EDTA-2Na(8wt% solution) | 0.01 | 0.01 | 0.01 | 0.01 | 0.01 | 0.01 |
| Formic Acid pH Adjust (85wt% solution) | 0.03 | 0.03 | 0.03 | 0.03 | 0.03 | 0.03 |
| FeAS (10wt% solution) | 0.03 | 0.03 | 0.03 | 0.03 | 0.03 | 0.03 |
| tBHP(10wt% solution) | 1.56 | 1.56 | 1.56 | 1.56 | 1.56 | 1.56 |
| FF6 (5wt% solution) | 2.94 | 2.94 | 2.94 | 2.94 | 2.94 | 2.94 |
| | | | | | | |
| Solid content | 58% | 58% | 58% | 58% | 58% | 58% |

| | | | | | | |
|---|---|---|---|---|---|---|
| * The amount of ethylene in Table 1 refers to the amount of ethylene gas fed in each case. | | | | | | |

According to the above method and Table 1, an aqueous dispersion composition was obtained. Mix the composition in Table 2.1 with an SFJ-400 mixer at a rate of 250rpm to a uniform foam-containing composition and obtain the First glue. After mixing the composition of Table 2.2 by with an SFJ-400 mixer at a rate of 250 rpm, the Second glue is obtained.

**Table 2.1 Recipe of the First glue**

| | Ex.0 |
|---|---|
| aqueous dispersion (58wt% solid content) | 104 |
| Calcium carbonate | 291 |
| Xanthan gum | 1-3 |
| Foaming agent | 1.2 |
| Water | 44 |
| Total solid content | 80wt % |

| | |
|---|---|
| * The Brookfield viscosity of the First glue is between 5 000 and 7 000 mPa.s. | |

**Table 2.2 Recipe of the Second glue**

| | Ex.0 |
|---|---|
| aqueous dispersion (58wt% solid content) | 155 |
| Calcium carbonate | 250 |
| Xanthan gum | 1-3 |
| Water | 20 |
| Total solid content | 80wt % |

| | |
|---|---|
| * The Brookfield viscosity of the Second glue is between 9 000 and 11 000 mPa.s. | |

Sample preparation and method ST-1 for glass transition temperature measurement:
Take a certain amount of the aqueous polymer dispersion and dry at 25°C overnight and then let stand in a vacuum oven at 40°C for 24 hours to obtain an dried polymer product.
Take 8-15 mg of the dry product and heat from -80°C to 100°C at a heating rate of 10K/min using NETZSCH F203 analyzer in a closed sample cell in protective nitrogen atmosphere, according to ISO11357-1 2014, to determine the glass transition temperature (Tg) of the dried polymer product.

Testing method ST2 Brookfield viscosity:
According to GBIT 11175-2002, using Brookfield RV/DV rotational viscometer, at 25°C, 20 rpm, use No. 4 spindle to test the viscosity of the above samples.

The room temperature conditions in the present invention refer to: a temperature of 23±2°C and a relative humidity of 65±5%.

Laboratory bonding strength sample preparation method:
The size of the PP mesh and the tufted carpet of nylon fiber is 21cm*30cm.

The specific preparation steps are as follows:
(1) Use a 300µm wet film preparation device to apply the Second glue on the
   the glass plate with a thickness of 300um. Spread the PP mesh on the glue surface and press the roller twice with a 2kg roller to soak the PP mesh in the Second glue.
(2) Use a spatula to evenly spread the First glue on the back surface of the carpet. The glue dosage is between 0.05-0.08 g/cm².
(3) Remove the PP mesh from the Second glue, attach the PP mesh to the back surface of the carpet, and roll the composite structure twice with a 2kg roller to promote its adhesion.
(4) Put the bonded sample into a flat heating furnace and heat it at 145°C for 5 minutes.
(5) Leave the sample at room temperature for one day.
(6) Cut the sample into a 50mm*150mm rectangular sample.
(7) Soak the sample in 80°C water bath for 1 min, then take it out and hang it on the shelf for 15 minutes. Immediately test the 180° peel strength of the sample.

### Test method ST-4 wet bonding strength:

With reference to the method shown in Figure 1 of ISO11339-2010, the above-mentioned sample was used to measure the 180° peel strength on the XLW(G)-PC electronic tensile machine (Shandong Languang). The width of the sample is 50mm, and the vertical stretching distance is 50mm. The stretch value of 2mm at both the beginning and end of the test are not considered. The stretching speed is 300mm/min.

**Table 3**

| | Ex.0 | C.Ex.1 | Ex.2 | C.Ex.3 | C. Ex.4 |
|---|---|---|---|---|---|
| ST-4 wet bonding strength (N) | 9.1 | 8.4 | 7 | 6.3 | 5.5 |

The sample strips were prepared from the carpet adhesive containing Ex.0, Ex.2 or C.Ex.1 or Ex.3, and the wet bonding strength was greater than or equal to 6 N, indicating that their water resistance was good.

**Table 4 Evaluation about Stability and Workability**

| | Ex.0 | C.Ex.1 | Ex.2 | C.Ex.3 | C.Ex.5 |
|---|---|---|---|---|---|
| Brookfield viscosity of the aqueous dispersion (mPa.s) | 2000 | 700 | 700 | 2000 | 2000 |
| Stability evaluation | good | middle | middle | good | good |
| Brookfield viscosity (mPa.s) of the mixture obtained by mixing calcium carbonate and the aqueous dispersion, wherein calcium carbonate: solid content of water dispersion=4.8:1 | 6 000 | 5 000 | 3000 | 24000 | 10 000 |
| Workability evaluation | good | good | middle | middle | middle |
| overview | good | middle | middle | middle | middle |

When the Brookfield viscosity of the aqueous dispersion is between 1200-3000 mPa.s, it indicates that the stability of the aqueous dispersion is good. When the Brookfield viscosity of the mixture obtained by mixing the calcium carbonate and the aqueous dispersion is between 5000-7000 mPa.s, it indicates that the aqueous dispersion has better encapsulation of calcium carbonate. A carpet adhesive with good workability can be obtained.

## Claims

1. An aqueous polymer dispersion containing
Component (a) one or more ethylene-vinyl ester copolymers,
Component (b) one or more protective colloids,
component (c1) one or more nonionic surfactants, and
wherein the amount of component (b) protective colloid and component (c1) nonionic surfactant is less than or equal to 3.4 pphm, preferably between 1-3.4 pphm;
the weight ratio of the amount of component (b) protective colloid to component (c1) nonionic surfactant is between 1.01-2;
which also contains component (d) one or more dispersants, selected from polycarboxylates; and the amount of component (d) dispersants is less than or equal to 1 pphm,
wherein the component (b) protective colloid is selected from polyvinyl alcohol (PVOH),
wherein the term "pphm" refers to parts per hundred main monomer.

2. The aqueous polymer dispersion according to claim 1, wherein the weight ratio of the amount of component (b) protective colloid and component (c1) nonionic surfactant is between 1.05-1.5.

3. The aqueous polymer dispersion according to claim 1 or 2, wherein the sum of the amount of component (b) protective colloid and component (c1) nonionic surfactant is between 2-3.1 pphm.

4. The aqueous polymer dispersion according to any of claims 1-3, wherein the amount of component (b) protective colloid is less than or equal to 2 pphm, preferably between 1.0 and 1.8 pphm, more preferably between 1.3 and 1.7 pphm.

5. The aqueous polymer dispersion according to any of claims 1-4, wherein the dispersion further containing component (f) one or more thickeners, the dosage of which is less than or equal to 1 pphm, preferably less than or equal to 0.2 pphm, more preferably less than or equal to 0.5 pphm, more preferably between 0.05-0.2 pphm.

6. The aqueous polymer dispersion according to any of claims 1-5, which also contains component (d) one or more dispersants, selected from ammonium polycarboxylates, sodium polycarboxylates, potassium polycarboxylates, more preferably selected from ammonium polycarboxylate.

7. The use of the aqueous polymer dispersion according to any of claims 1-6 in the bonding composition, preferably in the foaming bonding composition, more preferably in the carpet bonding composition, and more preferably in the carpet bonding composition having an improved water resistance effect.

8. The use according to claim 7, wherein the carpet is machine made carpet, preferably woven carpet, tufted carpet, more preferably tufted broadloom carpet.

9. An aqueous carpet bonding composition containing
the aqueous polymer dispersion according to any of claims 1-6,
Component (e) solid powder,
foaming agent component (g1), and optional foaming aid component (g2) Optional component (f) thickeners,
Optional water.

10. A carpet obtained by bonding carpet fibers using the aqueous carpet bonding composition according to claim 9, wherein the carpet is a machine-made carpet, preferably a tufted carpet, and more preferably a tufted broadloom carpet.

## Patentansprüche

1. Wässrige Polymerdispersion enthaltend
Komponente (a) ein oder mehrere Ethylen-Vinylester-Copolymere,
Komponente (b) ein oder mehrere Schutzkolloide, Komponente (c1) ein oder mehrere nichtionische Tenside und
wobei die Menge an Komponente (b) Schutzkolloid und Komponente (c1) nichtionisches Tensid weniger als oder gleich 3,4 pphm, vorzugsweise zwischen 1 und 3,4 pphm, beträgt;
das Gewichtsverhältnis der Menge an Komponente (b) Schutzkolloid zu Komponente (c1) nichtionisches Tensid zwischen 1,01 und 2 beträgt;
die ferner Komponente (d) ein oder mehrere Dispergiermittel ausgewählt aus Polycarboxylaten enthält; und die Menge an Komponente (d) Dispergiermittel kleiner als oder gleich 1 pphm ist,
wobei die Komponente (b) Schutzkolloid ausgewählt ist aus Polyvinylalkohol (PVOH),
wobei der Begriff "pphm" Teile pro Hundert Hauptmonomer bezeichnet.

2. Wässrige Polymerdispersion gemäß Anspruch 1, wobei das Gewichtsverhältnis der Menge an Komponente (b) Schutzkolloid und Komponente (c1) nichtionisches Tensid zwischen 1,05 und 1,5 beträgt.

3. Wässrige Polymerdispersion gemäß Anspruch 1 oder 2, wobei die Summe der Menge an Komponente (b) Schutzkolloid und Komponente (c1) nichtionisches Tensid zwischen 2 und 3,1 pphm beträgt.

4. Wässrige Polymerdispersion gemäß einem der Ansprüche 1-3, wobei die Menge an Komponente (b) Schutzkolloid weniger als oder gleich 2 pphm, vorzugsweise zwischen 1,0 und 1,8 pphm, bevorzugter zwischen 1,3 und 1,7 pphm, beträgt.

5. Wässrige Polymerdispersion gemäß einem der Ansprüche 1-4, wobei die Dispersion ferner Komponente (f) ein oder mehrere Verdickungsmittel enthält, deren Dosierung weniger als oder gleich 1 pphm, vorzugsweise weniger als oder gleich 0,2 pphm, bevorzugter weniger als oder gleich 0,5 pphm, bevorzugter zwischen 0,05 und 0,2 pphm, beträgt.

6. Wässrige Polymerdispersion gemäß einem der Ansprüche 1-5, die ferner Komponente (d) ein oder mehrere Dispergiermittel ausgewählt aus Ammoniumpolycarboxylaten, Natriumpolycarboxylaten, Kaliumpolycarboxylaten, bevorzugter ausgewählt aus Ammoniumpolycarboxylat, enthält.

7. Verwendung der wässrigen Polymerdispersion gemäß einem der Ansprüche 1-6 in der Klebezusammensetzung, vorzugsweise in der schäumenden Klebezusammensetzung, bevorzugter in der Teppichklebezusammensetzung und bevorzugter in der Teppichklebezusammensetzung mit einer verbesserten Wasserbeständigkeitswirkung.

8. Verwendung gemäß Anspruch 7, wobei der Teppich maschinengefertigter Teppich ist, vorzugsweise gewebter Teppich, Tuftingteppich, bevorzugter Tuftingteppichboden.

9. Wässrige Teppichklebezusammensetzung enthaltend die wässrige Polymerdispersion gemäß einem der Ansprüche 1-6,
Komponente (e) festes Pulver,
Schaummittelkomponente (g1) und gegebenenfalls Schaumhilfskomponente (g2),
gegebenenfalls Komponente (f) Verdickungsmittel, gegebenenfalls Wasser.

10. Teppich, erhalten durch Verkleben von Teppichfasern unter Verwendung der wässrigen Teppichklebezusammensetzung gemäß Anspruch 9, wobei der Teppich ein maschinengefertigter Teppich, vorzugsweise ein Tuftingteppich und bevorzugter ein Tuftingteppichboden, ist.

## Revendications

1. Dispersion aqueuse de polymère contenant
Composant (a) un ou plusieurs copolymères d'éthylène-ester de vinyle
Composant (b) un ou plusieurs colloïdes protecteurs, Composant (c1) un ou plusieurs tensioactifs non ioniques, et
la quantité de composant (b) colloïde protecteur et de composant (c1) tensioactif non ionique étant inférieure ou égale à 3,4 pphm, préférablement entre 1 et 3,4 pphm ;
le rapport en poids de la quantité de composant (b) colloïde protecteur sur le composant (c1) tensioactif non ionique étant comprise entre 1,01 et 2 ;
qui contient également un composant (d) un ou plusieurs dispersants, choisis parmi des polycarboxylates ; et la quantité de composant (d) dispersants étant inférieure ou égale à 1 pphm,
le composant (b) colloïde protecteur étant choisi parmi un poly(alcool vinylique) (PVOH),
le terme « pphm » faisant référence à des parties par cent de monomère principal.

2. Dispersion aqueuse de polymère selon la revendication 1, le rapport en poids de la quantité de composant (b) colloïde protecteur et de composant (c1) tensioactif non ionique étant comprise entre 1,05 et 1,5.

3. Dispersion aqueuse de polymère selon la revendication 1 ou 2, la somme de la quantité de composant b) colloïde protecteur et de composant (c1) tensioactif non ionique étant comprise entre 2 et 3,1 pphm.

4. Dispersion aqueuse de polymère selon l'une quelconque des revendications 1 à 3, la quantité de composant b) colloïde protecteur étant inférieure ou égale à 2 pphm, préférablement comprise entre 1,0 et 1,8 pphm, plus préférablement entre 1,3 et 1,7 pphm.

5. Dispersion aqueuse de polymère selon l'une quelconque des revendications 1 à 4, la dispersion contenant en outre un composant (f) un ou plusieurs épaississants, le dosage duquel étant inférieur ou égal à 1 pphm, préférablement inférieur ou égal à 0,2 pphm, plus préférablement inférieur ou égal à 0,5 pphm, plus préférablement compris entre 0,05 et 0,2 pphm.

6. Dispersion aqueuse de polymère selon l'une quelconque des revendications 1 à 5, qui contient également un composant (d) un ou plusieurs dispersants, choisis parmi des polycarboxylates d'ammonium, des polycarboxylates de sodium, des polycarboxylates de potassium, plus préférablement choisis parmi un polycarboxylate d'ammonium.

7. Utilisation de la dispersion aqueuse de polymère selon l'une quelconque des revendications 1 à 6 dans la composition de liaison, préférablement dans la composition de liaison moussante, plus préférablement dans la composition de liaison de tapis, et plus préférablement dans la composition de liaison de tapis ayant un effet de résistance à l'eau amélioré.

8. Utilisation selon la revendication 7, le tapis étant un tapis fabriqué à la machine, préférablement un tapis tissé, un tapis touffeté, plus préférablement une moquette touffetée.

9. Composition aqueuse de liaison de tapis contenant la dispersion aqueuse de polymère selon l'une quelconque des revendications 1 à 6,
un composant (e) poudre solide,
un composant d'agent moussant (g1), et un composant auxiliaire de moussage éventuel (g2)
un composant éventuel (f) épaississants,
de l'eau éventuelle.

10. Tapis obtenu par liaison de fibres de tapis en utilisant la composition aqueuse de liaison de tapis selon la revendication 9, le tapis étant un tapis fabriqué à la machine, préférablement un tapis tissé, un tapis touffeté, et plus préférablement une moquette touffetée.
